# EUROPEAN PATENT APPLICATION

(11) **EP 3 886 229 A1**
(43) Date of publication of application: **29.09.2021**
(21) Application number: 20198456.4
(22) Date of filing: 25.09.2020
(51) Int. Cl.: H01M 10/0525, H01M 10/0565, H01M 4/13, H01M 4/36, H01M 4/58, H01M 4/62, H01M 10/058

(54) **LITHIUM ION POLYMER BATTERY AND METHOD OF PRODUCING THE SAME**

(30) Priority: 26.03.2020 JP 2020055787
(71) Applicant: Sumitomo Osaka Cement Co., Ltd., Tokyo 102-8465 (JP)
(72) Inventor: OONO, Kouji, TOKYO, 102-8465 (JP)
(74) Representative: Cabinet Laurent & Charras

(57) **Abstract**

The lithium ion polymer battery includes: a positive electrode that includes at least a positive electrode material which is capable of desorbing lithium ions when the battery is charged; and a negative electrode which includes a current collector and an ionic conductive polymer layer which is provided on the current collector.

## Description

### CROSS-REFERENCE TO RELATED APPLICATIONS

This application claims the benefit of Japanese Patent Application No. 2020-055787 filedMarch 26, 2020, the disclosure of which is herein incorporated by reference in its entirety.

### BACKGROUND OF THE INVENTION

### Field of the Invention

The present invention relates to a lithium ion polymer battery and a method of producing the same.

### Description of Related Art

Recently, as a battery in which a reduction in size and weight and an increase in capacity are expected, a non-aqueous electrolyte secondary battery such as a lithium ion secondary battery have been proposed and put into practice. The lithium ion secondary battery includes a positive electrode and a negative electrode that have properties capable of reversibly inserting and desorbing lithium ions; and a nonaqueous electrolyte.

As a negative electrode active material of a negative electrode material of the lithium ion secondary battery, in general, a carbon material or a Li-containing metal oxide having properties capable of reversibly inserting and desorbing lithium ions is used. Examples of the Li-containing metal oxide include lithium titanate (Li₄Ti₅O₁₂).

On the other hand, a positive electrode of the lithium ion secondary battery include: an electrode current collector; and a positive electrode material mixture layer that is formed on one surface of the electrode current collector and includes a positive electrode material and a binder. Examples of the positive electrode active material in the positive electrode material include a Li-containing metal oxide such as lithium iron phosphate (LiFePO₄) having properties capable of reversibly inserting and desorbing lithium ions. Examples of the electrode current collector include metal foil.

As the electrolytic solution of the lithium ion secondary battery, a nonaqueous solvent is used. As the nonaqueous solvent, a solvent in which a positive electrode active material that is oxidized and reduced at a high potential or a negative electrode active material that is oxidized and reduced at a low potential can be suitably used is used. As a result, a lithium ion secondary battery having a high voltage can be implemented. This lithium ion secondary battery has lighter weight, smaller size, and higher energy as compared to other secondary batteries of the related art such as a lead battery, a nickel-cadmium battery, or a nickel-metal hydride battery. Therefore, the lithium ion secondary battery is used not only as a small power supply for use in a portable electronic apparatus such as a mobile phone or a laptop computer but also as a stationary large power supply for emergency.

Recently, improvement of performance has been required for the lithium ion secondary battery, and various techniques have been considered. For example, in order to improve safety, an all-solid-state battery including a nonvolatile polymer electrolyte membrane or an inorganic solid electrolyte or a battery including an ionic liquid without including a combustible organic solvent in an electrolyte has been considered in various ways. In particular, a lithium ion polymer battery including a polymer electrolyte membrane has been actively considered due to the following reasons (for example, refer to Japanese Laid-open Patent Publication No. 2003-100348) . As in the batteries of the related art including a liquid electrolyte, a production process using coating is applicable to the lithium ion polymer battery. Therefore, the lithium ion polymer battery is inexpensive. In addition, in the lithium ion polymer battery, the conductivity of the electrolyte membrane is high, and it is easy to reduce the thickness. Further, in the lithium ion polymer battery, the electrolyte membrane is dense solid. Therefore, the formation of a metallic needle crystal called dendrite is suppressed. Therefore, in the lithium ion polymer battery, a negative electrode including a Li-containing metal oxide can be used without deterioration in safety, and significant improvement in capacity can be expected.

### SUMMARY OF THE INVENTION

Due to extremely high reactivity of metallic lithium, it is necessary that the lithium ion polymer battery is produced in an environment in which the atmosphere such as humidity is highly controlled. Therefore, in the lithium ion polymer battery, it is more important to manage the production environment than in batteries of the related art including a carbon negative electrode or an oxide negative electrode such as lithium titanate, and there is a problem in that the production costs are high.

The present invention has been made in consideration of the above-described circumstances, and an object thereof is to provide a lithium ion polymer battery that can be produced without using metallic lithium and of which substantially all the production steps can be performed in air, and a method of producing the same.

In order to achieve the object, the present inventors conducted a thorough investigation and found that, with a lithium ion polymer battery including: a positive electrode that includes at least a positive electrode material which is capable of desorbing lithium ions when the battery is charged; and a negative electrode which includes a current collector and an ionic conductive polymer layer which is provided on the current collector, a lithium ion polymer battery of which substantially all the production steps can be performed in air can be obtained, thereby completing the present invention.

In order to achieve the above-described object, according to one aspect of the present invention, there is provided a lithium ion polymer battery including: a positive electrode that includes at least a positive electrode material which is capable of desorbing lithium ions when the battery is charged; and a negative electrode which includes a current collector and an ionic conductive polymer layer which is provided on the current collector.

In the aspect of the present invention, the positive electrode material may be a carbon-coated positive electrode active material which includes core particles and a carbonaceous film with which surfaces of the core particles are coated, wherein the core particles being formed of a positive electrode active material represented by formula LiₓA_{y}D_{z}PO₄ (where A represents at least one selected from the group consisting of Co, Mn, Ni, Fe, Cu, and Cr, D represents at least one selected from the group consisting of Mg, Ca, Sr, Ba, Ti, Zn, B, Al, Ga, In, Si, Ge, Sc, and Y, 0.9 < x < 1.1, 0 < y ≤ 1, 0 ≤ z < 1, and 0.9 < y + z < 1.1).

In the aspect of the present invention, A in formula LiₓA_{y}D_{z}PO₄ may represent Fe.

In the aspect of the present invention, the ionic conductive polymer layer may include an ionic conductive polymer and a lithium salt, wherein the ionic conductive polymer being formed of polyethylene oxide, a copolymer having a polyethylene oxide structure, ethylene oxide, a copolymer having an ethylene oxide structure, or a derivative thereof.

According to another aspect of the present invention, there is provided a method of producing a lithium ion polymer battery, the method including: forming a battery member by bonding a positive electrode that includes at least a positive electrode material capable of desorbing lithium ions when the battery is charged and a negative electrode that includes an ionic conductive polymer layer to each other; removing water from the battery member at least once before sealing the batterymember; and sealing the battery member in a low water environment after removing water from the battery member.

With the lithium ion polymer battery according to the present invention, it is possible to provide a lithium ion polymer battery that can be produced without using metallic lithium and of which substantially all the production steps can be performed in air.

With the method of producing a lithium ion polymer battery according to the present invention, it is possible to provide a lithium ion polymer battery that can be produced without using metallic lithium and of which substantially all the production steps can be performed in air.

### BRIEF DESCRIPTION OF THE DRAWINGS

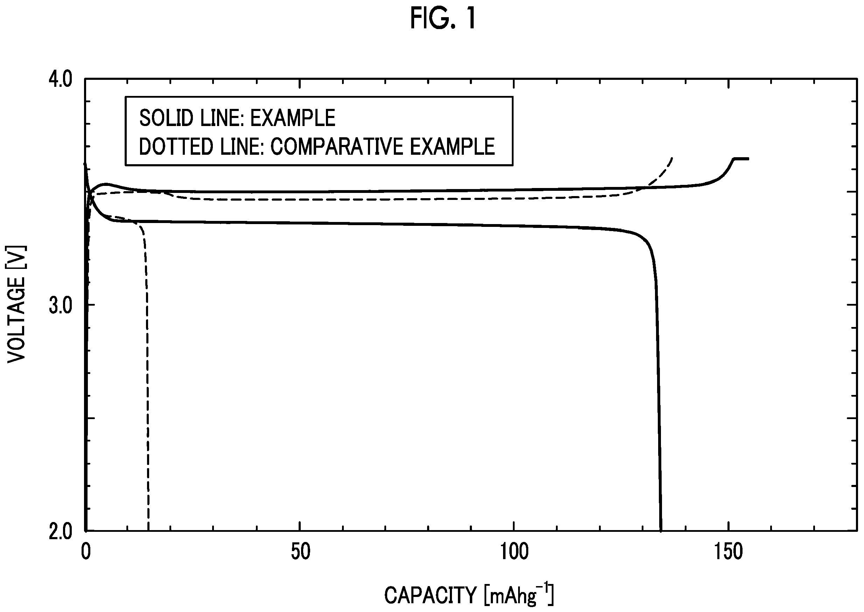

FIG. 1 is a diagram showing charge and discharge curves of lithium ion polymer batteries according to Example and Comparative Example.

### DETAILED DESCRIPTION OF THE INVENTION

An embodiment of a lithium ion polymer battery and a method of producing the same according to the present invention will be described.

The embodiment will be described in detail for easy understanding of the concept of the present invention, but the present invention is not limited thereto unless specified otherwise.

### Lithium Ion Polymer Battery

The lithium ion polymer battery according to the embodiment includes: a positive electrode that includes at least a positive electrode material capable of desorbing lithium ions when charged; and a negative electrode in which an ionic conductive polymer layer is provided on a current collector.

In the lithium ion polymer battery according to the embodiment, the positive electrode includes: a positive electrode current collector; and a positive electrode mixture layer (positive electrode) that is formed on one main surface of the positive electrode current collector and includes a positive electrode material. In addition, in the lithium ion polymer battery according to the embodiment, the negative electrode includes: a negative electrode current collector; and an ionic conductive polymer layer (negative electrode) that is formed on at least one main surface of the negative electrode current collector.

### Positive Electrode

### Positive Electrode Mixture Layer

The positive electrode mixture layer include the positive electrode material.

The thickness of the positive electrode mixture layer is preferably 1 µm or more and 10000 µm or less and more preferably 10 µm or more and 5000 µm or less. As the thickness of the positive electrode mixture layer increases, the battery capacity can increase. On the other hand, when the thickness of the positive electrode mixture layer is excessively large, a decrease in output may occur due to an increase in resistance.

In the lithium ion polymer battery according to the embodiment, the content of the positive electrode material in the positive electrode mixture layer is preferably 50% by mass or more and 99% by mass or less and more preferably 60% by mass or more and 95% by mass or less. As the content of the positive electrode material increases, the battery capacity can increase. On the other hand, when the content of the positive electrode material is excessively large, a decrease in output may occur due to a decrease in conductivity or a decrease in durability may occur due to peel-off, drop-off, or the like of the positive electrode mixture caused by a decrease in binding properties.

In the lithium ion polymer battery according to the embodiment, the positive electrode mixture layer may include components other than the positive electrode material. Examples of the components other than the positive electrode material include an ionic conductive polymer, a binder, and a conductive auxiliary agent.

As the binder, that is, as a binder resin, for example, a polytetrafluoroethylene (PTFE) resin, a polyvinylidene fluoride (PVdF) resin, or a fluororubber is suitably used.

As the conductive auxiliary agent, for example, at least one selected from the group consisting of particulate carbon such as acetylene black (AB), Ketjen black, or Furnace black, vapor-grown carbon fiber (VGCF), and filamentous carbon such as carbon nanotubes is used.

### Positive Electrode Material

In the lithium ion polymer battery according to the embodiment, the positive electrode material is capable of desorbing lithium ions (Li⁺) when charged. Specifically, the positive electrode material is capable of desorbing lithium ions (Li⁺) when charged at a voltage of higher than 0 V versus lithium. The upper limit voltage is determined depending on the withstand voltage of other polymer members, and as the voltage increases in the range of the withstand voltage, a battery having a higher capacity can be obtained. For example, when a polyethylene oxide-based conductive polymer is used, the upper limit voltage is preferably 4.5 V or lower. In the lithium ion polymer battery according to the embodiment, examples of the positive electrode material include: a carbon-coated positive electrode active material including core particles and a carbonaceous film with which surfaces of the core particles are coated, the core particles being formed of a positive electrode active material represented by formula LiₓA_{y}D_{z}PO₄ (where A represents at least one selected from the group consisting of Co, Mn, Ni, Fe, Cu, and Cr, D represents at least one selected from the group consisting of Mg, Ca, Sr, Ba, Ti, Zn, B, Al, Ga, In, Si, Ge, Sc, and Y, 0.9 < x < 1.1, 0 < y ≤ 1, 0 ≤ z < 1, and 0.9 < y + z < 1.1); a compound (positive electrode active material) represented by LiAO₂ (where A represents at least one selected from the group consisting of Co, Mn, Ni, Fe, Cu, and Cr) ; and a compound (positive electrode active material) represented by Li₂MO₃ (where M represents at least one selected from the group consisting of Co, Mn, Ni, Fe, Cu, and Cr). In particular, as the positive electrode material, a carbon-coated positive electrode active material including core particles and a carbonaceous film with which surfaces of the core particles are coated is preferable, the core particles being formed of a positive electrode active material represented by formula LiₓA_{y}D_{z}PO₄ (where A represents at least one selected from the group consisting of Co, Mn, Ni, Fe, Cu, and Cr, D represents at least one selected from the group consisting of Mg, Ca, Sr, Ba, Ti, Zn, B, Al, Ga, In, Si, Ge, Sc, and Y, 0.9 < x < 1.1, 0 < y ≤ 1, 0 ≤ z < 1, and 0.9 < y + z < 1.1).

The crystallite diameter of core particles is preferably 10 nm or more and 1000 nm or less and more preferably 50 nm or more and 300 nm or less. When the crystallite diameter of the core particles is less than 10 nm, a large amount of carbon is required to sufficiently coat surfaces of the core particles with a pyrolytic carbon film, and a large amount of a binder is required such that the content of the core particles in the positive electrode decreases. As a result, the capacity of the battery may decrease. Likewise, the carbonaceous film may peel off due to an insufficient binding strength. On the other hand, when the crystallite diameter of the core particles is more than 1000 nm, the internal resistance of the core particles excessively increases. Therefore, when a battery is formed, the discharge capacity at a high charge-discharge rate may decrease. In addition, when charge and discharge is repeated, an intermediate phase is likely to be formed, and a constituent element is eluted from the intermediate phase. As a result, the capacity decreases.

As a method of calculating the crystallite diameter of the core particles, the crystallite diameter can be determined by analyzing a powder X-ray diffraction pattern obtained by X-ray diffraction measurement using a Williamson-Hall method.

In the lithium ion polymer battery according to the embodiment, the average particle diameter of the core particles is preferably 10 nm or more and 1000 µm or less and more preferably 50 nm or more and 10 µm or less. As the average particle diameter of the core particles increases, the frequency of use of a binder or the like can be reduced, and thus a battery having a high capacity can be obtained. On the other hand, when the average particle diameter of the core particles is excessively large, the output may decrease due to ion diffusion in the particles or a decrease in reaction area.

The average particle diameter of the core particles can be obtained using a particle diameter distribution measurement method such as a laser diffraction method or by observation with an electron microscope.

In the lithium ion polymer battery according to the embodiment, the specific surface area of the core particles is preferably 0.2 m²/g or more and 30 m²/g or less and more preferably 5 m²/g or more and 20 m²/g or less. As the specific surface area of the core particles decreases, the frequency of use of a binder or the like can be reduced, and thus a battery having a high capacity can be obtained. On the other hand, when the specific surface area is excessively small, the output may decrease due to ion diffusion in the particles or a decrease in reaction area.

In the lithium ion polymer battery according to the embodiment, the specific surface area of the core particles is measured using a specific surface area meter with a BET method using nitrogen (N₂) adsorption.

In the lithium ion polymer battery according to the embodiment, the content of the core particles in the positive electrode material is preferably 95% by mass or more and 100% by mass or less and more preferably 98% by mass or more and 100% by mass or less. As the content of the core particles increases, the capacity increases, but conductivity is not imparted depending on the properties of the active material. Therefore, the absence of the conductive carbonaceous film causes an increase in resistance, that is, a decrease in output.

In the lithium ion polymer battery according to the embodiment, the positive electrode material may include a carbon-coated positive electrode active material including: the primary particles of the positive electrode active material; and a carbonaceous film (pyrolytic carbon film) with which surfaces of the primary particles (positive electrode active material) are coated. In addition, in the lithium ion polymer battery according to the embodiment, the positive electrode material includes a granulated body that is obtained by granulating primary particles of the carbon-coated positive electrode active material.

In the lithium ion polymer battery according to the embodiment, the thickness of the carbonaceous film with which the surfaces of the primary particles of the positive electrode active material are coated is preferably 0 nm or more and 10 nm or less and more preferably 0.5 nm or more and 3 nm or less. As the thickness of the carbonaceous film with which the surfaces of the primary particles are coated decreases, the capacity increases, but conductivity is not imparted depending on the properties of the active material. Therefore, the absence of the conductive carbonaceous film causes an increase in resistance, that is, a decrease in output.

The thickness of the carbonaceous film with which the surfaces of the primary particles are coated is measured, for example, using a transmission electron microscope (TEM) or an energy dispersive X-ray microanalyzer (EDX).

In the lithium ion polymer battery according to the embodiment, the average particle diameter of the primary particles of the carbon-coatedpositive electrode activematerial is preferably 10 µm or more and 100 µm or less, more preferably 50 nm or more and 10 µm or less, and still more preferably 100 nm or more and 300 nm or less. When the average primary particle diameter of the carbon-coated positive electrode active material is 10 nm or more, an increase in the amount of carbon caused by an excessive increase in specific surface area can be suppressed. On the other hand, when the average primary particle diameter of the carbon-coated positive electrode active material is 100 µm or less, the electron conductivity and the ion diffusion performance can be maintained due to a large specific surface area.

The average particle diameter of the primary particles of the carbon-coated positive electrode active material can be obtained using a particle diameter distribution measurement method such as a laser diffraction method or by observation with an electron microscope.

The carbon content in the primary particles of the carbon-coated positive electrode active material is measured, for example, using a carbon analyzer (carbon-sulfur analyzer: EMIA-810W (trade name), manufactured by Horiba Ltd.).

In the lithium ion polymer battery according to the embodiment, the coating ratio of the carbonaceous film in the primary particles of the carbon-coated positive electrode active material is preferably 50% or more, more preferably 70% or more, and still more preferably 90% or more. When the coating ratio of the carbonaceous film in the primary particles of the carbon-coated positive electrode active material is 50% or more, the coating effect of the carbonaceous film can be sufficiently obtained.

The coating ratio of the carbonaceous film in the primary particles of the carbon-coated positive electrode active material is measured, for example, using a transmission electron microscope (TEM) or an energy dispersive X-ray microanalyzer (EDX) .

### Positive Electrode Active Material

It is preferable that the positive electrode active material is formed of a positive electrode active material represented by formula LiₓA_{y}D_{z}PO₄ (where A represents at least one selected from the group consisting of Co, Mn, Ni, Fe, Cu, and Cr, D represents at least one selected from the group consisting of Mg, Ca, Sr, Ba, Ti, Zn, B, Al, Ga, In, Si, Ge, Sc, and Y, 0.9 < x < 1.1, 0 < y ≤ 1, 0 ≤ z < 1, and 0.9 < y + z < 1.1).

From the viewpoints of high discharge capacity and high energy density, it is preferable that the positive electrode active material satisfies 0.9 < x < 1.1, 0 < y ≤ 1, 0 ≤ z < 1, and 0.9 < y + z < 1.1 in LiₓA_{y}D_{z}PO₄.

From the viewpoint that a positive electrode mixture layer that can realize high discharge potential and high safety, Co, Mn, Ni, or Fe is preferable as A, and Mg, Ca, Sr, Ba, Ti, Zn, or Al is preferable as D. In addition, when a polyethylene oxide-based ionic conductive polymer is used, it is more preferable that A represents Fe due to a relationship with the withstand voltage.

### Positive Electrode Current Collector

The positive electrode current collector is not particularly limited. For example, a metal foil or a metal mesh formed of metal such as Al, Fe, or Ti is used.

### Negative Electrode

### Ionic Conductive Polymer Layer

The ionic conductive polymer layer includes an ionic conductive polymer and a lithium salt, the ionic conductive polymer being formed of polyethylene oxide, a copolymer having a polyethylene oxide structure, ethylene oxide, a copolymer having an ethylene oxide structure, or a derivative thereof.

The thickness of the ionic conductive polymer layer is preferably 1 µm or more and 100 µm or less and more preferably 30 µm or more and 70 µm or less. As the thickness of the ionic conductive polymer layer decreases, the resistance decreases, which is advantageous in capacity and output. As the thickness of the ionic conductive polymer layer is extremely small, abnormality such as short-circuit may occur along with deposition of metallic lithium.

In the lithium ion polymer battery according to the embodiment, the content of the ionic conductive polymer in the ionic conductive polymer layer is preferably 30% by mass or more and 95% by mass or less. When the content of the ionic conductive polymer is 30% by mass or more, excellent film formability and strength can be obtained. On the other hand, when the content of the ionic conductive polymer is 95% by mass or less, sufficient ionic conductivity is exhibited.

In the lithium ion polymer battery according to the embodiment, the ionic conductive polymer layer may include components other than the ionic conductive polymer and the lithium salt. Examples of the components other than the ionic conductive polymer and the lithium salt include a binder, a reinforcing material (filler), and an ionic conductive inorganic solid (solid electrolyte). As the binder, the same binder as that used in the positive electrode mixture layer can be used.

### Ionic Conductive Polymer

In the lithium ion polymer battery according to the embodiment, the ionic conductive polymer is formed of polyethylene oxide, a copolymer having a polyethylene oxide structure, ethylene oxide, a copolymer having an ethylene oxide structure, or a derivative thereof.

Examples of the derivative of polyethylene oxide include a modified polyethylene oxide.

In the ionic conductive polymer, polyethylene oxide or a modified polyethylene oxide is preferable.

### Lithium Salt

Examples of the lithium salt include lithium perchlorate, lithium hexafluorophosphate, lithium bis(trifluoromethanesulfonyl)imide, and lithium bis(fluorosulfonyl)imide.

### Negative Electrode Current Collector

The negative electrode current collector is not particularly limited. For example, a metal foil or a metal mesh formed of metal such as Cu, Ni, or Ti is used.

### Polymer Electrolyte Membrane

Examples of the polymer electrolyte membrane include a polymer electrolyte membrane including polyethylene oxide and a lithium salt included in the polyethylene oxide. Examples of the lithium salt include lithium bis (trifluoromethanesulfonyl) imide (LiTFSI), LiPF₆, and LiClO₄. As the polymer electrolyte membrane, a modified polyethylene oxide into which a crosslinkable functional group is introduced in order to improve strength, or a modified polyethylene oxide into which a functional group is introduced in order to secure conductivity (to prevent crystallization) at a low temperature can be suitably used. In addition, as the polymer electrolyte membrane, a copolymer of ethylene oxide and another monomer can also be used, for example, in order to improve adhesiveness between the positive electrode and the negative electrode, to improve temperature characteristics, or to improve oxidation resistance.

The lithium ion polymer battery according to the embodiment includes: a positive electrode that includes at least a positive electrode material capable of desorbing lithium ions when charged; and a negative electrode in which an ionic conductive polymer layer is provided on a current collector. Therefore, it is possible to provide a lithium ion polymer battery that can be produced without using metallic lithium and of which substantially all the production steps can be performed in air.

### Method of Producing Positive Electrode Material

A method of producing the positive electrode material is not particularly limited, the positive electrode material being a carbon-coated positive electrode active material including: core particles that are formed of a positive electrode active material represented by formula LiₓA_{y}D_{z}PO₄; and a carbonaceous film with which surfaces of the core particles are coated. Examples of the method include a method including: a step of preparing a dispersion by mixing LiₓA_{y}D_{z}PO₄ particles and an organic compound with each other and dispersing the mixture; and a step of obtaining a dry material by drying the dispersion; a step of calcinating the dry material in a non-oxidative atmosphere to obtain positive electrode material particles formed of primary particles of a carbon-coated electrode active material.

The LiₓA_{y}D_{z}PO₄ particles are not particularly limited and are preferably obtained using, for example, a method including: introducing a Li source, an A source, a D source, and a PO source into water to obtain a predetermined ratio between the amounts of the sources; stirring the components to obtain a LiₓA_{y}D_{z}PO₄ precursor solution; stirring and mixing the precursor solution at 15°C or higher and 70°C or lower for 1 hour or longer and 20 hours or shorter to prepare a hydration precursor solution; putting this hydration precursor solution into a pressure resistant vessel; and performing a hydrothermal treatment at a high temperature and a high pressure, for example, at 130°C or higher and 190°C or lower and 0.2 MPa or higher for 1 hour or longer and 20 hours or shorter.

In this case, by adjusting the temperature and the time during the stirring of the hydration precursor solution and the temperature, the pressure, and the time during the hydrothermal treatment, the particle diameter of the LiₓA_{y}D_{z}PO₄ particles can be controlled to be a desired diameter.

In this case, as the Li source, for example, at least one selected from the group consisting of a lithium inorganic acid salt such as lithiumhydroxide (LiOH), lithium carbonate (Li₂CO₃), lithium chloride (LiCl), or Lithium phosphate (Li₃PO₄) and a lithium organic acid salt such as lithium acetate (LiCH₃COO) or lithium oxalate ((COOLi)₂) is suitably used.

Among these, lithium chloride or lithium acetate is preferable from the viewpoint of obtaining a uniform solution phase.

As the A source, at least one selected from the group consisting of a Co source formed of a cobalt compound, a Mn source formed of a manganese compound, a Ni source formed of a nickel compound, a Fe source formed of an iron compound, a Cu source formed of a copper compound, and a Cr source formed of a chromium compound is preferable.

In addition, as the D source, at least one selected from the group consisting of a Mg source formed of a magnesium compound, a Ca source formed of a calcium compound, a Sr source formed of a strontium compound, a Ba source formed of a barium compound, a Ti source formed of a titanium compound, a Zn source formed of a zinc compound, a B source formed of a boron compound, an Al source formed of an aluminum compound, a Ga source formed of a gallium compound, an In source formed of an indium compound, a Si source formed of a silicon compound, a Ge source formed of a germanium compound, a Sc source formed of a scandium compound, and a Y source formed of a yttrium compound is preferable.

As the PO₄ source, for example, at least one selected from the group consisting of yellow phosphorus, red phosphorus, phosphoric acids such as orthophosphoric acid (H₃PO₄) or metaphosphoric acid (HPO₃), ammonium dihydrogen phosphate (NH₄H₂PO₄), diammonium hydrogen phosphate ((NH₄)₂HPO₄), ammonium phosphate ((NH₄)₃PO₄), lithium phosphate (Li₃PO₄), dilithium hydrogen phosphate (Li₂HPO₄), lithium dihydrogen phosphate (LiH₂PO₄), and hydrates thereof is preferable.

In particular, orthophosphoric acid is preferable from the viewpoint of easily forming a uniform solution phase.

Examples of the organic compound include polyvinyl alcohol, polyvinyl pyrrolidone, cellulose, starch, gelatin, carboxymethyl cellulose, methyl cellulose, hydroxymethyl cellulose, hydroxyethyl cellulose, polyacrylic acid, polystyrene sulfonic acid, polyacrylamide, polyvinyl acetate, glucose, fructose, galactose, mannose, maltose, sucrose, lactose, glycogen, pectin, alginic acid, glucomannan, chitin, hyaluronic acid, chondroitin, agarose, polyether, and polyols.

Examples of the polyols include polyethylene glycol, polypropylene glycol, polyglycerin, and glycerin.

The organic compound may be mixed such that the carbon content in the organic compound is 1 part by mass or more and 10 parts by mass or less with respect to 100 parts by mass of the LiₓA_{y}D_{z}PO₄ particles.

The LiₓA_{y}D_{z}PO₄ particles and the organic compound are mixed with each other to prepare a mixed liquid.

Next, the obtained mixed liquid is dispersed to obtain a dispersion.

A dispersion method is not particularly limited and it is preferable to use a device capable of disentangling the agglomerated state of the LiₓA_{y}D_{z}PO₄ particles. Examples of the disperser include a ball mill, a sand mill, and a planetary mixer. In particular, by using a continuous disperser, sampling can be performed during the dispersion, and an end point can be easily determined using a granularity.

Next, the dispersion is dried to obtain a dry material.

In this step, a drying method is not particularly limited as long as a solvent (water) can be removed from the dispersion.

A spray drying method can be used for drying. For example, a method of spraying and drying the dispersion in a high temperature atmosphere at 100°C or higher and 300°C or lower to obtain a particulate dry material or a granular dry material can be used.

Next, the dry material is calcinated in a non-oxidative atmosphere in a temperature range of 600°C or higher and 1000°C or lower and preferably 650°C or higher and 900°C or lower.

As the non-oxidative atmosphere, an inert atmosphere such as nitrogen (N₂) or argon (Ar) is preferable, and when it is desired to further suppress oxidation, a reducing atmosphere including reducing gas such as hydrogen (H₂) is preferable.

Here, the reason why the calcination temperature of the dry material is 600°C or higher and 1000°C or lower is that, it is not preferable that the calcination temperature is lower than 600°C because the decomposition reaction of the organic compound included in the dry material do not sufficiently progress, the carbonization of the organic compound is insufficient, and the produced decomposition reaction product is a high-resistance organic decomposition product. On the other hand, when the calcination temperature is higher than 1000°C, a component constituting the dry material, for example, lithium (Li) is evaporated such that the composition deviates, particle growth in the dry material is promoted, the discharge capacity at a high charge-discharge rate decreases, and it is difficult to realize sufficient charge and discharge rate performance. In addition, impurities are produced, and these impurities cause deterioration in capacity when charge and discharge is repeated.

The calcination time is not particularly limited as long as the organic compound can be sufficiently carbonized. For example, the calcination time is 0.1 hours or longer and 10 hours or shorter.

Through the calcination, active material particles formed of the primary particles of the carbon-coated electrode active material can be obtained. The obtained particles may be optionally cracked again.

### Conductive Auxiliary Agent

The conductive auxiliary agent is not particularly limited. For example, at least one selected from the group consisting of particulate carbon such as acetylene black (AB), Ketjen black, or Furnace black, vapor-grown carbon fiber (VGCF), and filamentous carbon such as carbon nanotubes is used.

### Solvent

A solvent used in a positive electrode material paste including the positive electrode material for the lithium ion polymer battery according to the embodiment can be appropriately selected depending on the ionic conductive polymer material. By appropriately selecting the solvent, the positive electrode material paste can be easily applied to a coating object such as the electrode current collector.

Examples of the solvent include water; alcohols such as methanol, ethanol, 1-propanol, 2-propanol (isopropyl alcohol: IPA), butanol, pentanol, hexanol, octanol, and diaceton alcohol; esters such as ethyl acetate, butyl acetate, ethyl lactate, propylene glycol monomethyl ether acetate, propylene glycol monoethyl ether acetate, and γ-butyrolactone; ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether; ketones such as acetone, methyl ethyl ketone (MEK), methyl isobutylketone (MIBK), acetyl acetone, and cyclohexanone; amides such as dimethylformamide, N,N-dimethylacetoacetamide, and N-methyl-2-pyrrolidone (NMP) ; and glycols such as ethylene glycol, diethylene glycol, and propylene glycol. Among these solvents, one kind may be used alone, or a mixture of two or more kinds may be used.

The content rate of the solvent in the positive electrode material paste is preferably 50% by mass or more and 70% by mass or less and more preferably 55% by mass or more and 65% by mass or less with respect to 100% by mass that is the total mass of the positive electrode material for the lithium ion polymer battery according to the embodiment, the ionic conductive polymer, and the solvent.

When the content rate of the solvent in the positive electrode material paste is in the above-described range, a positive electrode material paste having excellent positive electrode forming characteristics and excellent battery characteristics can be obtained.

### Method of Producing Positive Electrode

By applying the positive electrode material paste to at least one main surface of the electrode current collector to form a coating film and drying the coating film, an electrode current collector in which the coating film formed of a mixture including the positive electrode material, the ionic conductive polymer, and the conductive auxiliary agent described above is formed on at least the main surface can be obtained. Next, optionally, the coating film may be pressed and bonded. The ionic conductive polymer can also be crosslinked. For crosslinking, a generally usedmethodusing heat, ultraviolet light, an electron beam, or the like can be suitably used.

In addition, after applying and drying the positive electrode not including the ionic conductive polymer, a solution including the ionic conductive polymer is applied to the positive electrode, impregnated thereinto, and dried, and the ionic conductive polymer can also be optionally crosslinked. For crosslinking, a generally used method using heat, ultraviolet light, an electron beam, or the like can be suitably used.

### Method of Producing Negative Electrode

A method of producing the negative electrode is not particularly limited as long as it is a method capable of forming the ionic conductive polymer layer on one main surface of the negative electrode current collector using the ionic conductive polymer and the lithium salt described above. Examples of the method of producing the negative electrode include the following method.

First, the ionic conductive polymer and the lithium salt described above and optionally a binder and a solvent are mixed with each other to prepare a paste (hereinafter, also referred to as "negative electrode material paste").

It is preferable that the content of the binder in the negative electrode material paste is as small as possible within a range where required adhesiveness can be obtained.

In order to easily apply the negative electrode material paste including the negative electrode material to the coating object such as the negative electrode current collector, the solvent may be appropriately added to the negative electrode material paste.

Examples of the solvent used in the negative electrode material paste include the same solvent as that used in the positive electrode material paste.

The content rate of the solvent in the negative electrode material paste is preferably 60 parts by mass or more and 400 parts by mass or less and more preferably 80 parts by mass or more and 300 parts by mass or less with respect to 100 parts by mass that is the total mass of the negative electrode material, the binder, and the solvent.

By controlling the content of the solvent to be in the above-described range, the negative electrode material paste having excellent electrode formability and excellent battery characteristics can be obtained.

A method of mixing the negative electrode material paste is not particularly limited as long as it is a method capable of uniformly mixing the components. For example, a method of using a kneader such as a ball mill, a sand mill, a planetary mixer, a paint shaker, or a homogenizer can be used.

Next, by applying the negative electrode material paste to one main surface of the negative electrode current collector to obtain a coating film, drying the coating film, and optionally pressing and bonding the dry coating film, the negative electrode in which the ionic conductive polymer layer is formed on the main surface of the negative electrode current collector can be obtained.

### Method of producing Lithium Ion Polymer Battery

A method of producing the lithium ion polymer battery according to the embodiment includes: a step (hereinafter, also referred to as "step A") of forming a battery member by bonding a positive electrode that includes at least a positive electrode material capable of desorbing lithium ions when charged and a negative electrode that includes an ionic conductive polymer layer to each other; a step (hereinafter also referred to as "step B") of removing water from the battery member at least once before sealing the battery member; and a step (hereinafter, also referred to as "step C") of sealing the battery member in a low water environment after removing water from the battery member.

In the step A, a battery member is formed by bonding the positive electrode and the negative electrode to each other.

Here, the positive electrode and the negative electrode are bonded to each other such that the positive electrode mixture layer and the negative electrode current collector face each other through the ionic conductive polymer layer.

In the step A, when the positive electrode and the negative electrode are bonded to each other, these electrodes may be optionally pressed.

In addition, the step A can be performed in air.

In the step B, water is removed from the battery member at least once before sealing the battery member formed in the step A in a cell.

In order to remove water from the battery member, it is preferable that the battery member is dried at 50°C or higher and 150°C or lower for 5 hours or longer and 48 hours or shorter.

The drying temperature or drying time of the battery member is appropriately adjusted depending on the amount of the member, the water content, the material of the member, and the like.

The number of times water is removed from the battery member is not particularly limited as long as water can be removed to a water content where there is no problem in battery operation. Water may be removed multiple times.

In order to remove water from the battery member in the step B, vacuum drying may be performed.

In addition, a step after the step B is performed in a low water environment to avoid repermeation of water.

In the step C, the battery member is sealed in the cell in a low water environment after removing water from the battery member. As a result, the lithium ion polymer battery according to the embodiment is obtained.

Here, the low water environment refers to an environment where the water content at which there is no problem in battery operation can be obtained in the cell, and refers to an environment (for example, a dew point of -40°C or lower) having a managed dew point that is used for producing a typical lithium ion battery.

In the method of producing the lithium ion polymer battery according to the embodiment, substantially all the production steps can be performed in air.

### Examples

Hereinafter, the present invention will be described in detail using Examples, but is not limited to the following Examples.

### Example

### Synthesis of Positive Electrode Material

Water is added to 2 mol of lithium phosphate (Li₃PO₄) and 2 mol of iron (II) sulfate (FeSO₄), and the components were mixed with each other such that the total volume was 4 L. As a result, a uniform slurry-like mixture was prepared.

Next, this mixture was accommodated in a pressure-resistant airtight container having a volume of 8 L, and hydrothermal synthesis was performed at 150°C for 24 hours. As a result, a precipitate of the positive electrode active material was produced.

Next, this precipitate was cleaned with water to obtain a cake-like positive electrode active material.

Next, 200 g of water, 10 g of polyethylene glycol as an organic compound, and 8 g of sucrose were added to 150 g (in terms of solid content) of the positive electrode active material, and the mixture thereof was dispersed with a bead mill using zirconia balls having a diameter of 5 mm as medium particles for 2 hours. As a result, a uniform slurry was prepared.

Next, this slurry was sprayed and dried in air at 200°C. As a result, a granulated body formed of the positive electrode material coated with an organic material having an average particle diameter of 8.5 µm was obtained.

Next, the obtained granulated body was calcinated in a nitrogen atmosphere at 680°C for 3 hours. As a result, a granulated body of the positive electrode active material coated with a carbonaceous film having an average particle diameter of 8.5 µm was obtained.

### Cracking of Agglomerate

Next, using a jet mill (trade name: SJ-100, manufactured by Nisshin Engineering Inc.), the above-described agglomerate were cracked under conditions of a supply rate of 180 g/h to obtain a positive electrode material.

### Preparation of Lithium Ion Polymer Battery

The positive electrode material, polyethylene oxide 100000 (PEO 100000; average molecular weight: 100000 g/mol) as an ionic conductive polymer (base material), lithium bis(trifluoromethanesulfonyl)imide (LiTFSI) as a lithium salt, acetylene black (AB) as a conductive auxiliary agent, and carboxymethyl cellulose (CMC) as a thickener were added to water as a solvent and were mixed with each other such that a mass ratio positive electrode material:PEO 100000:LiTFSI:AB:CMC thereof in the paste was 65:24:6:4:1 and the total solid content of the paste was 40 % by mass, and the mixture was kneaded using a kneader (trade name: AWATORI RENTARO, manufactured by THINKY Corporation) under conditions of revolution speed: 1200 rpm and rotation speed: 600 rpm for 30 minutes. As a result, the positive electrode material paste (for the positive electrode) was prepared.

This positive electrode material paste (for the positive electrode) was applied to a surface of aluminum foil (electrode current collector) having a thickness of 30 µm to form a coating film, and this coating film was dried in air at 120°C to form a positive electrode mixture layer on the surface of the aluminum foil.

Next, the positive electrode mixture layer was pressed at a linear pressure of 5000 N/100 mm to prepare a positive electrode.

Next, a crosslinked polyethylene oxide polymer (tradename: IX-O-LP-02, manufactured by Nippon Shokubai Co., Ltd.) as an ionic conductive polymer (base material) and LiTFSI as a lithium salt were dissolved in water as a solvent such that a mass ratio IX-O-LP-02-LiTFSI was 4:1. Further, 0.5 parts by mass of 4,4'-azobis(4-cyanovaleric acid) as an initiator with respect to 100 parts by mass of IX-O-LP-02 was added to prepare a solution.

The obtained solution was applied to copper foil having a thickness of 20 µm and was dried and crosslinked in air at 150°C to form the ionic conductive polymer layer on a surface of the copper foil. As a result, a negative electrode was prepared. The concentration and coating thickness of the solution were adjusted such that the thickness of the ionic conductive polymer layer was 60 µm.

The positive electrode and the negative electrode obtained as described above were bonded and pressed at a predetermined pressure, and the obtained laminate was cut into a size of 2 cm². As a result, a battery member was obtained.

Next, the battery member was dried in a vacuum at 80°Cfor 12 hours to remove water, and the battery member was arranged and sealed in a CR2032 coin cell in an environment having a dew point of -70°C or lower. As a result, a lithium ion polymer battery according to Example was prepared.

### Comparative Example

A lithium ion polymer battery according to Comparative Example was prepared using the same method as that of Example, except that the vacuum drying step of the battery member was not performed.

### Evaluation of Lithium Ion Polymer Battery

The discharge capacity of each of the lithium ion polymer batteries according to Example and Comparative Example was evaluated as follows.

In an environment at 60°C, constant current charge was performed at a current value of 0.1 C until the battery voltage reached 3.65 V, and charge was performed at a constant voltage of 3.65 V until the current decreased to a value corresponding to 0.01 C. Next, discharge was performed at a current value of 0.1 C until the battery voltage reached 2.0 V.

FIG. 1 shows charge and discharge curves of the lithium ion polymer batteries according to Example and Comparative Example. It was found from the result of FIG. 1 that, in the lithium ion polymer battery according to Example, the discharge capacity was 134 mAhg⁻¹, and an excellent charge and discharge operation was exhibited. On the other hand, in the lithium ion polymer battery according to Comparative Example, metallic lithium was not deposited on the negative electrode current collector and was inactivated due to remaining water in the battery. Therefore, it was found that, in the lithium ion polymer battery according to Comparative Example, the discharge capacity was 15mAhg⁻¹, and discharge was notable to be substantially performed.

The present invention provides a lithium ion polymer battery that can be produced without using metallic lithium and of which substantially all the production steps can be performed in air, and a method of producing the same.

The lithium ion polymer battery according to the present invention can provide a battery having excellent safety and excellent energy density at a low cost, which significantly contributes to the progress of the use of a lithium ion polymer battery for a movable body.

## Claims

1. A lithium ion polymer battery comprising:
a positive electrode that includes at least a positive electrode material which is capable of desorbing lithium ions when the battery is charged; and
a negative electrode which includes a current collector and an ionic conductive polymer layer which is provided on the current collector.

2. The lithium ion polymer battery according to claim 1,
wherein the positive electrode material is a carbon-coated positive electrode active material which includes
core particles, and
a carbonaceous film with which surfaces of the core particles are coated,
wherein the core particles being formed of a positive electrode active material represented by formula LiₓA_{y}D_{z}PO₄ (where A represents at least one selected from the group consisting of Co, Mn, Ni, Fe, Cu, and Cr, D represents at least one selected from the group consisting of Mg, Ca, Sr, Ba, Ti, Zn, B, Al, Ga, In, Si, Ge, Sc, and Y, 0.9 < x < 1.1, 0 < y ≤ 1, 0 ≤ z < 1, and 0.9 < y + z < 1.1).

3. The lithium ion polymer battery according to claim 2,
wherein A in formula LiₓA_{y}D_{z}PO₄ represents Fe.

4. The lithium ion polymer battery according to claim 1,
wherein the ionic conductive polymer layer includes
an ionic conductive polymer, and
a lithium salt,
wherein the ionic conductive polymer being formed of polyethylene oxide, a copolymer having a polyethylene oxide structure, ethylene oxide, a copolymer having an ethylene oxide structure, or a derivative thereof.

5. A method of producing a lithium ion polymer battery, the method comprising:
forming a battery member by bonding a positive electrode that includes at least a positive electrode material capable of desorbing lithium ions when the battery is charged and a negative electrode that includes an ionic conductive polymer layer to each other;
removing water from the battery member at least once before sealing the battery member; and
sealing the battery member in a low water environment after removing water from the battery member.
